Europäisches Patentamt

European Patent Office

Office européen des brevets

(11) Veröffentlichungsnummer: **0 410 071 A1**

# (12) EUROPÄISCHE PATENTANMELDUNG

(21) Anmeldenummer: 90101763.2

(22) Anmeldetag: 30.01.90

(51) Int. Cl.5: **A62B 17/00**

(30) Priorität: 27.07.89 DE 8909111 U

(43) Veröffentlichungstag der Anmeldung:
30.01.91 Patentblatt 91/05

(84) Benannte Vertragsstaaten:
AT BE CH DE ES FR GB IT LI NL SE

(71) Anmelder: AUERGESELLSCHAFT GMBH
Thiemannstrasse 1
D-1000 Berlin 44(DE)

(72) Erfinder: Flessa, Peter
Gluckstrasse 31
D-6000 Frankfurt(DE)

(54) Gasdichter Vollschutzanzug mit einem unter dem Anzug zu tragende Mess- und Warngerät.

(57) Die Erfindung beschreibt einen gasdichten Vollschutzanzug (2), der in schadstoffhaltiger Umgebung getragen wird und den Anzugträger gegen toxische Stoffe schützt. Für den Fall, daß in der Umgebungsluft brennbare oder explosible Gemische von Gasen und Dämpfen vorhanden sind, die im Bereich der unteren Explosionsgrenze liegen und somit eine Explosionsgefahr darstellen, müßte dies dem Anzugträger angezeigt werden, damit er gewarnt wird. Diese Aufgabe wird dadurch gelöst, daß unter dem Anzug ein Meß- und Warngerät (1) angeordnet ist, das aus einem Diffusionsmeßkopf (3) mit aktiven und inaktiven Gasspürelementen besteht. Der Diffusionsmeßkopf (3) ist hierbei in einem im Anzugstoff (2a) gasdicht angeordneten Gehäuse (5) untergebracht, wobei das Gehäuse zur Außenatmosphäre hin eine Membrane (12) aufweist. Der Diffusionsmeßkopf (3) ist mittels einer Kabelverbindung (4) an das am Körper des Anzugträgers festgelegte Meß- und Warngerät (1) angeschlossen.

Fig. 1

EP 0 410 071 A1

Die Erfindung bezieht sich auf einen gasdichten Vollschutzanzug mit einem unter dem Anzug zu tragenden Meß- und Warngerät zur Überwachung einer explosionsgefährdeten Umgebung, bestehend aus einem Diffusionsmeßkopf mit aktiven und inaktiven Gasspürelementen, die zur Atmosphäre hin von einer Sinterscheibe abgedeckt sind.

Vollschutzanzüge werden zur Arbeit und Rettung in schadstoffhaltiger Umgebung getragen und schützen den Anzugträger gegen toxische Stoffe. Für den Fall, daß in der Umgebungsluft brennbare oder explosible Gemische von Gasen und Dämpfen vorhanden sind, die im Bereich der unteren Explosionsgrenze liegen und somit eine Explosionsgefahr darstellen können, müßte diese dem Anzugträger angezeigt werden, damit er gewarnt wird, und zwar durch ein tragbares Meß- und Warngerät. Eine außerhalb des Schutzanzuges vorgesehene Trageweise würde jedoch ein derartiges Meß- und Warngerät durch aggressive Schadstoffe in der Umgebungsluft betriebsunfähig machen können. Darüber hinaus wäre auch die Bedienung des Gerätes mit den unförmigen Anzughandschuhen äußerst problematisch und nicht sicher durchführbar. Außerdem wäre ein akustischer Alarm außerhalb des Schutzanzuges vom Anzugträger selbst nicht zu hören.

Der Erfindung liegt die Aufgabe zugrunde, die vorstehend genannten Nachteile bei einem Schutzanzug im Zusammenhang mit einem die Explosionsgefahr anzeigenden Meß- und Warngerät der eingangs genannten Art zu beseitigen, und einen Schutzanzug mit Meß- und Warngerät zu schaffen, das im Schutzanzug geschützt und einfach bedienbar sowie sicher in der Wirkungsweise ist.

Diese Aufgabe wird dadurch gelöst, daß ein den Diffusionsmeßkopf des Meß- und Warngerätes aufnehmendes Gehäuse im Anzugstoff gasdicht angeordnet ist, wobei das Gehäuse zur Außenatmosphäre hin eine Membrane aufweist, und daß der Diffusionsmeßkopf mittels einer Kabelverbindung an das am Körper des Anzugträgers festgelegte Meß- und Warngerät anschließbar ist.

Die mit der Erfindung erzielten Vorteile bestehen insbesondere darin, daß mit einfachen Mitteln ein Diffusionsmeßkopf eines Meß- und Warngerätes im Schutzanzug angeordnet werden kann, ohne daß bauliche Veränderungen am Schutzanzug vorgenommen werden müssen.

Weitere vorteilhafte Ausgestaltungen der Erfindung ergeben sich aus den Unteransprüchen 2 bis 7.

Ein Ausführungsbeispiel der Erfindung ist in der Zeichnung dargestellt und wird im folgenden näher beschrieben.

Es zeigt

Fig. 1 eine Darstellung des Trägers mit Schutzanzug und einem unter dem Anzug zu tragenden Meß- und Warngerät, und

Fig. 2 eine Schnittdarstellung der erfindungsgemäßen Anordnung eines Diffusionsmeßkopfes im Schutzanzug mit einem Meß-und Warngerät

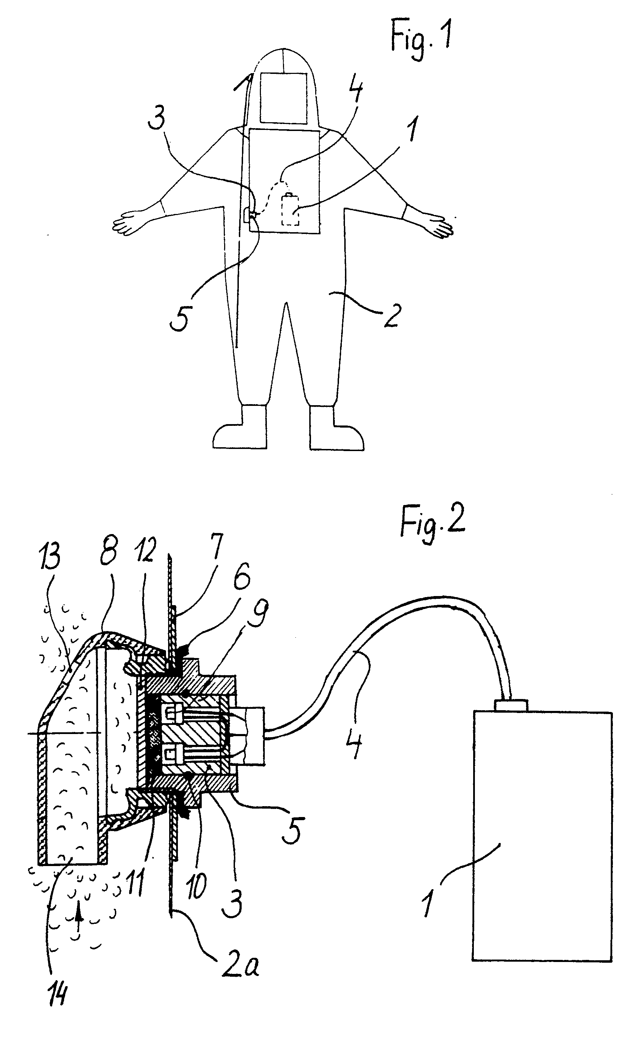

Wie aus Fig. 1 ersichtlich ist, wird ein Meß- und Warngerät 1 unter einem gasdichten Vollschutzanzug 2 am Körper des Anzugträgers getragen, wobei der mit der Außenatmosphäre in Verbindung stehende Diffusionsmeßkopf 3 als Meßgrößenaufnehmer über eine Kabelverbindung 4 mit dem Meß- und Warngerät verbunden ist. Die Kabelverbindung 4 kann steck- oder verschraubbar am Meß- und Warngerät 1 angeordnet sein.

Wie aus Fig. 2 ersichtlich ist, ist im Anzugstoff 2a ein Gehäuse 5 zur unverlierbaren Aufnahme des Diffusionsmeßkopfes 3 gasdicht angeordnet, und zwar derart, indem das Gehäuse 5 durch den Anzugstoff 2a hindurchgesteckt und über einen Gleitring 6 und einen an der Innenseite des Anzugstoffes 2a angeordneten und mit diesem gasdicht verbundenen starren Rahmen 7 mit einem an der Außenseite des Schutzanzuges angeordneten Kappenteil 8 verschraubt wird. In das Gehäuse 5 wird der Diffusionsmeßkopf 3 mit den aktiven und inaktiven Gasspürelementen 9 über ein O-Ring 10 steckbar eingesetzt. Die Gasspürelemente 9 sind zur Außenatmosphäre hin von einer Sinterscheibe 11 abgedeckt. Zum Schutz der Gasspürelemente 9 gegen aggressive Schadstoffe, ist im Gehäuse 5 zur Außenatmosphäre hin eine Membrane 12 vorgesehen, die vor der Sinterscheibe 11 angeordnet ist und durch die brannbare Gase oder Dämpfe zu den Gasspürelementen 9 hindurch diffundieren können. Die zu messenden und brennbaren Gase oder Dämpfe gelangen in das mit dem Diffusionsmeßkopf 3 strömungsmäßig in Verbindung stehende Kappenteil 8. Das Kappenteil 8 weist in Strömungsrichtung eine Öffnung 13 auf, die gegenüber der Eintrittsöffnung 14 für die brennbaren Gase und Dämpfe angeordnet ist und die eine entsprechende Ventilation für den zu messenden Dampf- oder Gasstrom bewirken soll, nachdem sich vor der Sinterscheibe 11 vorteilhaft ein Überdruck bzw. Puffer aufgebaut hat. Dieser Überdruck bewirkt, daß der zu messende Gas- bzw. Dampfstrom gleichmäßig von der Eintrittsöffnung 14 durch die Sinterscheibe 11 hindurch an die Gasspürelemente 9 strömt. Damit wird eine hohe Meßgenauigkeit gewährleistet.

Das Meß- und Warngerät 1 kann vorteilhaft auch in einer in der Zeichnung nicht dargestellten Tasche auf der Innenseite des Schutzanzuges untergebracht werden. Im Alarmfall, wenn eine Explosionsgefahr vorliegt, kann dies der Anzugträger jederzeit am Ertönen eines akustischen Alarms erkennen, der beispielsweise auch über einen Ohrhörer dem Anzugträger direkt übermittelt werden kann.

**Ansprüche**

1. Gasdichter Vollschutzanzug mit einem unter dem Anzug zu tragenden Meß- und Warngerät zur Überwachung einer explosionsgefährdeten Umgebung, bestehend aus einem Diffusionsmeßkopf mit aktiven und inaktiven Gasspürelementen, die zur Atmsophäre hin von einer Sinterscheibe abgedeckt sind, dadurch gekennzeichnet, daß

a) ein den Diffusionsmeßkopf (3) aufnehmendes Gehäuse (5) im Anzugstoff (2a) gasdicht angeordnet ist, wobei das Gehäuse zur Außenatmosphäre hin eine Membrane (12) aufweist, und

b) der Diffusionsmeßkopf (3) mittels einer Kabelverbindung (4) an das am Körper des Anzugträgers festgelegte Meß-und Warngerät (1) anschließbar ist.

2. Gasdichter Vollschutzanzug nach Anspruch 1, dadurch gekennzeichnet, daß das Gehäuse (5) über einen Gleitring (6) und einen an der Innenseite des Anzugstoffes (2a) angeordneten starren Rahmen (7) mit einem an der Außenseite des Schutzanzuges (2) angeordneten Kappenteil (8) unverlierbar gasdicht verschraubt ist.

3. Gasdichter Vollschutzanzug nach den Ansprüchen 1 und 2, dadurch gekennzeichnet, daß das Kappenteil (8) mit den Gasspürelementen (9) des Diffusionsmeßkopfes (3) strömungsmäßig verbunden ist.

4. Gasdichter Vollschutzanzug nach Anspruch 3, dadurch gekennzeichnet, daß das Kappenteil (8) in Strömungsrichtung eine Öffnung (13) aufweist, die gegenüber der Eintrittsöffnung (14) für die brennbaren Gase oder Dämpfe angeordnet ist.

5. Gasdichter Vollschutzanzug nach den Ansprüchen 1 bis 4, dadurch gekennzeichnet, daß der Diffusionsmeßkopf (3) mit den aktiven und inaktiven Gasspürelementen (9) in das Gehäuse (5) über einen O-Ring (10) steckbar eingesetzt ist.

6. Gasdichter Vollschutzanzug nach den Ansprüchen 1 bis 5, dadurch gekennzeichnet, daß im Gehäuse (5) zur Außenatmosphäre hin eine Membrane (12) vorgesehen ist, die vor der Sinterscheibe (11) liegt.

7. Gasdichter Vollschutzanzug nach Anspruch 1, dadurch gekennzeichnet, daß das Meß- und Warngerät (1) in einer Tasche auf der Innenseite des Schutzanzuges (2) angeordnet ist.

Fig. 1

Fig. 2

**Europäisches
Patentamt**

**EUROPÄISCHER
RECHERCHENBERICHT**

Nummer der Anmeldung

**EP 90 10 1763**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 005 980 (DRÄGER)<br>* Ansprüche 1-3; Figuren * | 1 | A 62 B 17/00 |
| | – – – | | |
| A | DE-B-1 146 758 (COMMISSARIAT A L'ENERGIE ATOMIQUE)<br>* Ansprüche 1-6; Figuren * | 1 | |
| | – – – – – | | |

RECHERCHIERTE
SACHGEBIETE (Int. Cl.5)

A 62 B

Der vorliegende Recherchenbericht wurde für alle Patentansprüche erstellt

| Recherchenort | Abschlußdatum der Recherche | Prüfer |
|---|---|---|
| Den Haag | 30 Oktober 90 | WALVOORT B.W. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
-----------------------------------------------------------------
& : Mitglied der gleichen Patentfamilie, übereinstimmendes Dokument